# EUROPÄISCHE PATENTANMELDUNG

(11) **EP 2 149 521 A1**
(43) Veröffentlichungstag der Anmeldung: **03.02.2010**
(21) Anmeldenummer: 09162942.8
(22) Anmeldetag: 17.06.2009
(51) Int. Cl.: B65G 59/04, B65H 3/08

(54) **Verfahren und Vorrichtung zum Abheben eines Stirndeckels von einem Stirndeckelstapel**

(30) Priorität: 29.07.2008 DE 102008040825
(71) Anmelder: Voith Patent GmbH, 89522 Heidenheim (DE)
(72) Erfinder: Holtwick, Michael, 47665 Sonsbeck (DE); Nelles, Josef, 52224 Stolberg (DE); Malindretos, Lars, 47804 Krefeld (DE)

(57) **Zusammenfassung**

Die Erfindung betrifft ein Verfahren zum Abheben eines Stirndeckels (2) von einem Stirndeckelstapel (3) mittels eines an einem Haltearm (5) befestigten und mit Saugnäpfen (4) versehenen Greifers (6), bei welchem Verfahren der Greifer (6) auf den Stirndeckelstapel (3) aufgesetzt wird und die Saugnäpfe (4) mit Unterdruck beaufschlagt werden.

Dabei möchte man sicherstellen, daß immer nur ein einzelner Stirndeckel (2) vom Stirndeckelstapel (3) abgenommen wird.

Hierzu wird wenigstens einer der Saugnäpfe (4) unabhängig von den restlichen Saugnäpfen angehoben, indem wenigstens ein Segment (6.1) des Greifers (6) vom Stirndeckelstapel (3) abgeschwenkt wird.

Weiterhin betrifft die Erfindung eine Vorrichtung (1) zur Durchführung des Verfahrens.

## Beschreibung

Die Erfindung betrifft ein Verfahren zum Abheben eines Stirndeckels von einem Stirndeckelstapel mittels eines an einem Haltearm befestigten und mit Saugnäpfen versehenen Greifers, bei welchem Verfahren der Greifer auf den obersten Stirndeckel des Stirndeckelstapels aufgesetzt wird und die Saugnäpfe mit Unterdruck beaufschlagt werden. Ferner betrifft die Erfindung eine Vorrichtung zur Durchführung des Verfahrens.

Die Erfindung wird nachstehend im Zusammenhang mit dem Verpacken einer Papierrolle, d.h. einer Rolle aus einer aufgewickelten Papier- oder Kartonbahn, beschrieben. Sie ist aber bei auch vergleichbaren Rollen, die verpackt werden sollen, anwendbar.

In einem der letzten Herstellungsschritte werden Papier- und Kartonbahnen auf die gewünschte Breite geschnitten und anschließend zu Rollen aufgewickelt. Diese Rollen haben üblicherweise einen Durchmesser im Bereich zwischen 0,5 und 3 m und eine Länge im Bereich von 0, 3 bis 5 m. Das Gewicht derartiger Rollen bewegt sich zwischen einigen hundert Kilogramm und einigen Tonnen. Diese Rollen müssen verpackt werden, um während eines Transportes oder während einer Lagerung vor Beschädigungen durch äußere Einflüsse geschützt zu sein.

In einem weit verbreiteten Verpackungsverfahren wird daher zunächst jeweils ein sogenannter Innenstirndeckel an die Stirnseiten der Rolle angelegt. Dieser Innendeckel muß passend zum Durchmesser der Rolle gewählt werden, d.h. sein Durchmesser muß etwas kleiner sein als der Durchmesser der Rolle. Danach wird die Umfangsfläche der Rolle mit einer Verpackungsbahn umgeben, beispielsweise mit Packpapier, und zwar mit einem axialen Überstand im Bereich von 250 bis 350 mm je Stirnseite. Dieser axiale Überstand wird auf die jeweilige Stirnseiten bzw. die dort befindlichen Innenstirndeckel umgebördelt. Danach wird auf jede Stirnseite noch ein sogenannter Außenstirndeckel aufgeklebt. Auch der Außenstirndeckel muß passend zum Durchmesser der Rolle gewählt werden.

Diese regelmäßig aus Papier- oder Pappe bestehenden und biegsamen Innen- bzw. Außenstirndeckel, für die im folgenden einfachheitshalber der Begriff "Stirndeckel" benutzt wird, sind stapelförmig aufeinander gelagert und werden von einem Roboter mit Greifvorrichtung jeweils einzeln von den jeweiligen in der Nähe der Verpackungsvorrichtung plazierten Stapeln abgenommen und an die Stirnseiten der Rolle angelegt. Dabei ergibt sich das Problem, daß oft nicht nur der jeweils oberste Stirndeckel abgehoben wird, sondern auch der darunterliegende, der dann neben dem Stapel abfällt und manuell entsorgt werden muß, was zu teilweise erheblichen Produktionsunterbrechungen führt, weil die Anlage für derartige Entsorgungsfälle vorübergehend stillgestellt werden muß, da der gesamte Roboterbereich während des laufenden Betriebs nicht vom Personal betreten werden darf.

Zur Lösung dieses Problems ist in DE 197 17 947 A1 eine Anlage vorgesehen worden, die wenigstens einen sich zumindest teilweise oberhalb des Stirndeckelstapels erstreckenden Halter aufweist, der sich auf dem Außenumfang des Stapels abstützt, wobei der oder die Halter beim Abheben des obersten Stirndeckels den darunter liegenden Deckel an seinem Platz halten. Jedem der Stirndeckelstapel muß mindestens ein solcher Halter zugeordnet sein, was dazu führt, daß jeweils soviel Halter vorzuhalten sind, als es Stapel gibt, und daß die Stapel stets eigens mit entsprechenden Haltern bestückt werden müssen.

Der Erfindung liegt die Aufgabe zugrunde, eine Vorrichtung der eingangs erwähnten Arten so weiterzubilden, daß die vorgenannten Probleme vermieden werden.

Diese Aufgabe wird erfindungsgemäß bei dem Verfahren der eingangs genannten Art dadurch gelöst, dass wenigstens einer der Saugnäpfe unabhängig von den restlichen Saugnäpfen angehoben, indem wenigstens ein Segment des Greifers vom Stirndeckelstapel abgeschwenkt wird.

Vorteilhafte Weiterbildungen ergeben sich aus den Unteransprüchen.

Beim Einsatz der erfindungsgemäßen Abhebevorrichtung wird der Greifer zunächst in bekannter Weise auf den Deckelstapel aufgesetzt. Sodann werden die Saugnäpfe mit Unterdruck beaufschlagt. Anschließend wird wenigstens einer der Saugnäpfe angehoben, indem mindestens ein erstes Segment des aus wenigstens zwei Segmenten bestehenden Greifers vom Stirndeckelstapel abgeschwenkt wird, so dass ein entsprechender Teilabschnitt des Stirndeckels vom Stirndeckelstapel abgehoben wird. Die Erfahrung hat gezeigt, dass die Bildung eines solchen "Zwickels" zwischen Stirndeckel und Stirndeckelstapel oftmals bereits genügt, um zu verhindern, dass der folgende Stirndeckel beim vollständigen Abheben des ersten Stirndeckels "mitgenommen" wird. Der an den nach wie vor mit Unterdruck beaufschlagten Saugnäpfe gehaltene Stirndeckel kann dann also "sauber" komplett vom Stirndeckelstapel abgehoben und auf bekannte Weise an die Stirnseite der zu verpackende Rolle angelegt werden. Es versteht sich, dass das abgeschwenkte mindestens eine Segment des Greifers auf dem Weg des Greifers vom Stirndeckelstapel zur Rolle zurückgeschenkt wird, so dass der Stirndeckel vor dem Aufsetzen auf die Rollenstirnseite wieder eine plane Stellung einnimmt. Wenn der Greifer aus mehr als zwei Segmenten besteht und alle Segmente nacheinander abgeschwenkt werden, wird der Abhebevorgang zusätzlich unterstützt.

Natürlich kann eine Steuer-/Regeleinheit vorhanden sein, die vorgibt, in welchen zeitlichen Abständen die Segmente nacheinander abgeschwenkt werden und ob alle infragekommenden Segmente abgeschwenkt werden sollen oder - und zwar beispielsweise in Abhängigkeit vom Flächengewicht des abzuhebenden Stirndeckels - nur ein Teil dieser Segmente. Das Gleiche gilt für den Unterdruck; auch er kann entsprechend der Beschaffenheit des Stirndeckels je verschieden vorgegeben werden. Die Erfindung wird im folgenden anhand dreier schematisierter Zeichnungen näher erläutert. Sie zeigen jeweils einen Stirndeckelstapel in Verbindung mit einer erfindungsgemäßen Abhebevorrichtung. Von den dargestellten Ausführungsformen kann aber in vielfacher Hinsicht abgewichen werden, ohne daß der Grundgedanken der Erfindung verlassen wird.

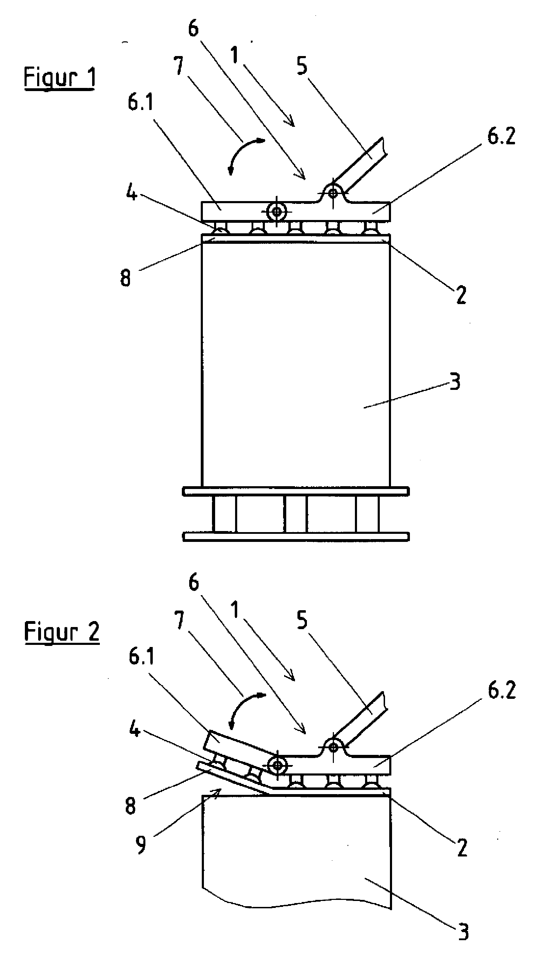

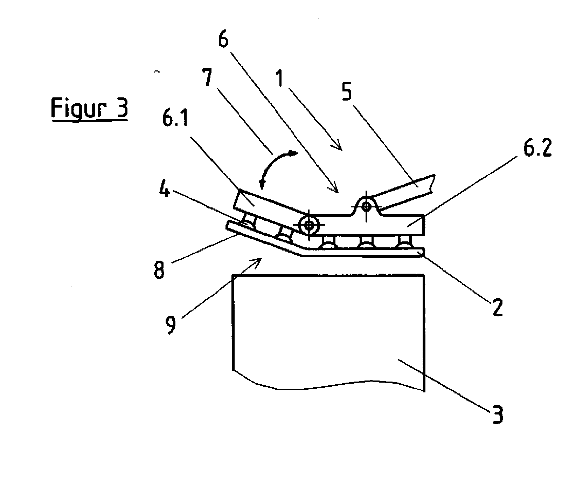

Die Fig. 1 bis 3 stellen die erfindungsgemäße Vorrichtung zum Abheben eines Stirndeckels von einem Stirndeckelstapel in aufeinanderfolgenden Betriebszuständen dar. Gleiche Teile sind mit gleichen Bezugsziffern versehen.

Fig. 1 zeigt eine Vorrichtung 1 zum Abheben jeweils eines Stirndeckels 2 von einem Stirndeckelstapel 3. Die Vorrichtung gehört zu einem nicht näher dargestellten, weil allgemein bekannten, Handhabungsroboter für das Anlegen von Stirndeckeln an die Stirnseiten von Materialbahnrollen, insbesondere zu verpackende Papierrollen. Die Vorrichtung 1 besteht aus ei-nem Haltearm 5, an dem ein Greifer 6 befestigt ist, der aus wenigstens zwei Segmenten (6.1, 6.2) besteht. Wenigstens eines der Segmente ist schwenkbar - siehe Pfeil 7. Auf der dem Stirndeckelstapel 3 zugewandten Seite des Greifers 6 sind Saugnäpfe 4 angebracht, die nach der bekannten Unterdrucktechnik arbeiten. Die Saugnäpfe 4 sind in im wesentlichen gleichen Abständen derart angeordnet, daß sie den abzuhebenden Stirndeckel 2 auf einer innen liegende Kreisbahn - auch als Randzone 9 bezeichnet - berühren. Zwischen diesen randständigen Saugnäpfen 4 können zusätzliche weiter innen liegende vorgesehen sein. Die Versorgungsleitungen für die Saugnäpfe 4 sind nicht dargestellt. Ebenfalls nicht dargestellt ist eine Steuer-/Regeleinheit, mittels derer der Unterdruck an den Saugnäpfen 4 nach Bedarf variiert werden kann bzw. dank derer bestimmt werden kann, welche Segmente beim Abheben des Stirndeckels abgeschwenkt werden und in welchem Winkeln dies jeweils geschieht. Die Steuer-/Regeleinheit sorgt auch dafür, dass alle Segmente vor dem Anlegen des Stirndeckels an die zu verpackende Papierrolle wieder in einer Ebene liegen.

Fig. 2 zeigt die erfindungsgemäße Vorrichtung in einem zweiten Betriebszustand, bei dem ein Segment (6.1) des Greifers (6) abgeschwenkt ist, so dass ein Teilabschnitt (9) des Stirndeckels (2) vom Stirndeckelstapel abgehoben ist.

Fig. 3 zeigt die erfindungsgemäße Vorrichtung in einem dritten Betriebszustand, bei dem der Stirndeckel (2) vom Stirndeckelstapel (3) vollständig abgehoben ist.

### Bezugszeichenliste

- 1: Stirndeckel-Abhebevorrichtung
- 2: Stirndeckel
- 3: Stirndeckelstapel
- 4: Saugnapf
- 5: Haltearm
- 6: Greifer
- 6.1: Segment des Greifers
- 6.2: Segment des Greifers
- 7: Pfeil
- 8: Randzone des Stirndeckels
- 9: Teilabschnitt des Stirndeckels

## Patentansprüche

1. Verfahren zum Abheben eines Stirndeckels (2) von einem Stirndeckelstapel (3) mittels eines an einem Haltearm (5) befestigten und mit Saugnäpfen (4) versehenen Greifers (5), bei welchem Verfahren der Greifer (6) auf den obersten Stirndeckel (2) des Stirndeckelstapels (3) aufgesetzt und die Saugnäpfe (4) mit Unterdruck beaufschlagt werden, **dadurch gekennzeichnet, daß** wenigstens einer der Saugnäpfe (4) unabhängig von den restlichen Saugnäpfen angehoben wird, indem wenigstens ein Segment (6.1) des Greifers (6) vom Stirndeckelstapel (3) abgeschwenkt wird.

2. Verfahren nach Anspruch 1, **dadurch gekennzeichnet, daß** wenigstens ein Segment (6.1) des Greifers (6) als erstes abgeschwenkt wird, so dass ein Teilabschnitt (9) des Stirndeckels vom Stirndeckelstapel (3) abgehoben wird.

3. Verfahren Anspruch 1 und 2, **dadurch gekennzeichnet, daß** wenigstens ein Saugnapf (4) den Stirndeckel in dessen Randbereich (8) erfasst.

4. Verfahren nach einem der vorgenannten Ansprüche, **dadurch gekennzeichnet, daß** fortschreitend oder gleichzeitig mindestens ein weiteres Segment (6.2) des Greifers (6) abgeschwenkt wird, wodurch der Vorgang des Abhebens des Stirndeckels (2) zusätzlich unterstützt wird.

5. Vorrichtung (1) zum Abheben eines Stirndeckels (2) von einem Stirndeckelstapel (3) mittels eines mit mehreren Saugnäpfen (4) ausgestatteten, an einem Haltearm (5) befestigten Greifers (6), **dadurch gekennzeichnet, daß** der Greifer wenigstens zweigeteilt ist.

6. Vorrichtung nach Anspruch 5, **dadurch gekennzeichnet, daß** mindestens ein Teilsegment (6.1) des Greifers (6) schwenk-/kippbar ist.

7. Vorrichtung nach einem der Ansprüche 5 und 6, **dadurch gekennzeichnet, daß** wenigstens einer der Saugnäpfe (4) als Flachsaugnapf ausgebildet ist.

8. Vorrichtung nach einem der Ansprüche 5 bis 7, **dadurch gekennzeichnet, daß** wenigstens einer der Saugnäpfe (4) derart angeordnet ist, dass er auf die Randzone (8) des Stirndeckels (2) einwirken kann.
